# EUROPÄISCHE PATENTSCHRIFT

(11) **EP 1 456 111 B1**
(45) Veröffentlichungstag und Bekanntmachung des Hinweises auf die Patenterteilung: **28.03.2007**
(21) Anmeldenummer: 02798294.1
(22) Anmeldetag: 18.12.2002
(51) Int. Cl.: B66C 1/66, F16G 15/08

(54) **ANSCHLUSSVORRICHTUNG ZUM ANSCHLIESSEN VON ANSCHLAG- ODER VERZURRMITTELN**
ATTACHING DEVICE FOR LIFTING OR LASHING MEANS
DISPOSITIF D'ASSEMBLAGE POUR ASSEMBLER DES MOYENS DE LEVAGE OU D'AMARRAGE

(30) Priorität: 21.12.2001 DE 10164598
(43) Veröffentlichungstag der Anmeldung: 15.09.2004
(73) Patentinhaber: RuD Ketten Rieger & Dietz GmbH u. Co. KG, 73432 Aalen (DE)
(72) Erfinder: SMETZ, Reinhard, 86720 Baldingen (DE)
(74) Vertreter: Grünecker, Kinkeldey, Stockmair & Schwanhäusser Anwaltssozietät
(86) Internationale Anmeldenummer: PCT/DE2002/004689
(87) Internationale Veröffentlichungsnummer: WO 2003/055785

(56) Entgegenhaltungen:
- DE-A- 10 013 845
- DE-U- 8 406 130
- US-A- 3 371 951
- US-A- 5 381 650

## Beschreibung

### Technisches Gebiet

Die Erfindung betrifft eine Anschlussvorrichtung zum Anschließen von Anschlag- oder Verzurrmitteln an zu transportierenden oder zu verzurrenden Gegenständen mit einem zu ihrer Befestigung am jeweiligen Gegenstand dienenden, von einer Schraube gebildeten Befestigungselement, mit einem Anschlusselement für das Anschlag- oder Verzurrmittel und mit einem das Befestigungselement mit dem Anschlusselement verbindenden, drehbar um die Längsachse des Befestigungselementes auf einer das Befestigungselement auf einem Teil seiner Länge umschließenden zweiteiligen Buchse gelagerten Verbindungselement, dessen Axiallage auf der Buchse durch an sich gegenüberliegenden Enden der Buchse angeordnete Ringflansche gesichert ist.

### Stand der Technik

Ein Anschlusselement der vorstehenden Art ist aus der DE 10013845 A1 bekannt. Bei der bekannten Vorrichtung ist das Verbindungselement im Gleitsitz auf einer Buchse gelagert, die aus zwei Teilen besteht, deren einander zugewandten Stimflächen gegeneinander anliegen. Die Gleitlagerung genügt in den meisten Fällen den zu erfüllenden Anforderungen. Probleme können indes dann auftreten, wenn schwere Gegenstände nicht nur angehoben, sondern zusätzlich gewendet werden sollen. Um die Drehbeweglichkeit eines Verbindungselementes zu erhöhen, ist es aus der DE 8406130.8 U 1 bekannt, zwischen dem Befestigungselement und dem Verbindungselement eine Wälzkörperreihe anzuordnen, deren Wälzkörper aus Kugeln bestehen, welche unter vergleichsweise großem Aufwand von der Außenseite des Verbindungselementes in ihre Führungsbahn eingeführt werden müssen. Die Verwendu ng nur einer Wälzkörperreihe setzt der Kippfestigkeit des Verbindungselementes gegenüber dem Befestigungselement dieser zweiten bekannten Vorrichtung enge Grenzen. Bekannt ist schließlich aus der US 3 371 951 A eine Anschlussvorrichtung, bei der das von einer Schraube gebildete Befestigungselement von zwei Buchsen umschlossen wird, von denen eine das Verbindungselement bildet. Um bei dieser Vorrichtung eine Drehbarkeit des Anschlusselementes zu gewährleisten, stützt sich die das Verbindungselement bildende Buchse einerseits über ein aus zwei Lagerringen und Kugeln bestehendes Axiallager gegen den Kopf der das Befestigungselement bildenden Schraube und andererseits über ein weiteres in gleicher Weise ausgebildetes Axiallager und einen Zwischenring an dem mit der Anschlussvorrichtung zu versehenden Gegenstand ab. Die dritte bekannte Vorrichtung vermag insofern nicht zu befriedigen, als ihr Aufbau kompliziert ist und die Wälzkörper ihrer Axiallager einer vom Grad des Anzugsmomentes der als Befestigungselement ausgebildeten Schraube abhängenden, unkontrollierten Vorspannung ausgesetzt ist.

### Darstellung der Erfindung

Der Erfindung liegt die Aufgabe zugrunde, bei einer Anschlussvorrichtung der in Betracht gezogenen Art, die Relativbeweglichkeit zwischen dem Befestigungselement und dem Verbindungselement dadurch zu erhöhen, dass die Gleitlagerung durch eine montagefreundliche Wälzlagerung ersetzt wird, wobei gleichzeitig eine hohe Kippfestigkeit des Verbindungselementes angestrebt wird. Diese Aufgabe wird bei einer gattungsgemäßen Anschlussvorrichtung dadurch gelöst, dass sich das Verbindungselement im Bereich der Ringflansche der Buchse über jeweils eine Wälzkörperreihe an der Buchse abstützt und eine für die Wälzkörper der Wälzkörperreihe vorgesehene Lauffläche aufweist.

Die erfindungsgemäße Anschlussvorrichtung lässt sich schnell und einfach montieren. Die Kippfestigkeit ihres Verbindungselementes ist aufgrund der Verwendung zweier im größtmöglichen Abstand voneinander angeordneter Wälzkörperreihen groß und die Drehbeweglichkeit des Verbindungselementes lässt auch beim Anheben schwerer Lasten nichts zu wünschen übrig.

Weitere Merkmale und Einzelheiten der Erfindung ergeben sich auch aus den Unteransprüchen und der nachstehenden Beschreibung zweier in der beigefügten Zeichnung dargestellter Ausführungsformen der Erfindung.

### Kurze Beschreibung der Zeichnungen

Es zeigen:
Figur 1 die Vorderansicht einer ersten Anschlussvorrichtung,
Figur 2 einen Schnitt längs der Linie II - II in Fig. 1,
Figur 3 teilweise im Schnitt die Seitenansicht einer zweiten Anschlussvorrichtung und
Figur 4 eine Draufsicht auf die Anschlussvorrichtung gemäß Fig. 3 bei über das Befestigungselement geklappten Anschlusselement.

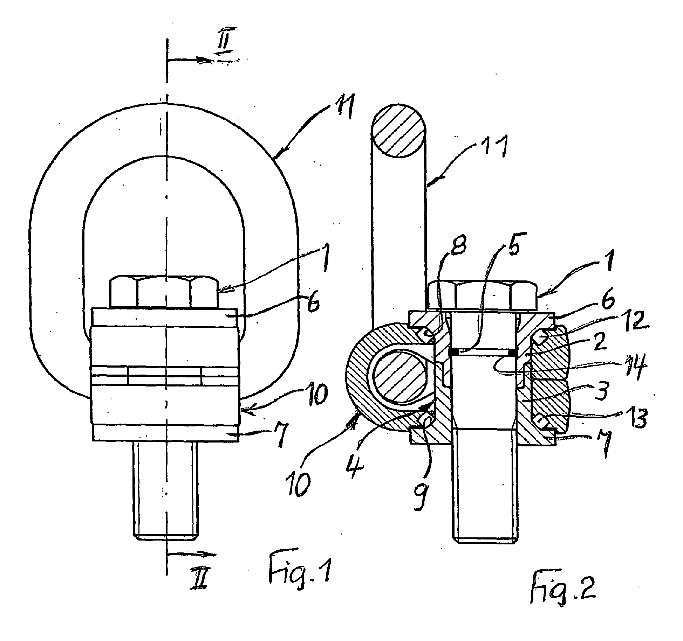

In Figur 1 und 2 ist 1 ein von einer Schraube gebildetes Befestigungselement, auf dem eine aus zwei Teilen 2 und 3 bestehende Buchse 4 gelagert ist. Die beiden Teile 2 und 3 überlappen sich im mittleren Bereich der Buchse 4 und sind in der Überlappungszone durch einen Presssitz miteinander verbunden. Ein Sprengring 5 sichert die Lage der Buchse 4 auf dem Befestigungselement 1.

An ihren sich gegenüberliegenden Enden weist die Buchse 4 zwei Ringflansche 6 und 7 auf, die über Kegelflächen 8 und 9 in den zylindrischen Teil der Buchse 4 übergehen. Im Bereich der Kegelflächen 8 und 9 sind zwischen der Buchse 4 und einem Verbindungselement 10, das das Befestigungselement mit einem ringförmigen Anschlusselement 11 verbindet, zwei Wälzkörperreihen 12 und 13 angeordnet, die zusammen mit der Buchse 4 und dem Verbindungselement 10 Schrägrollenlager bilden. Die Wälzkörperreihen 12 und 13 lassen sich einfach montieren, indem man zunächst die Wälzkörper der Wälzkörperreihe 13 auf der Kegelfläche 9 positioniert, anschließend das Verbindungselement 10 über den unteren Teil 3 der Buchse 4 schiebt, danach die Wälzkörper der Wälzkörperreihe 12 auf der für sie am Verbindungselement 10 vorgesehenen Lauffläche aufreiht und im Anschluss hieran den oberen Teil 2 und den unteren Teil 3 der Buchse zusammenpresst. In einem abschließenden Montageschritt wird das Befestigungselement 1 in die Buchse 4 gedrückt, bis der Sprengring 5 in eine Nut 14 im Innern der Buchse 4 einrastet.

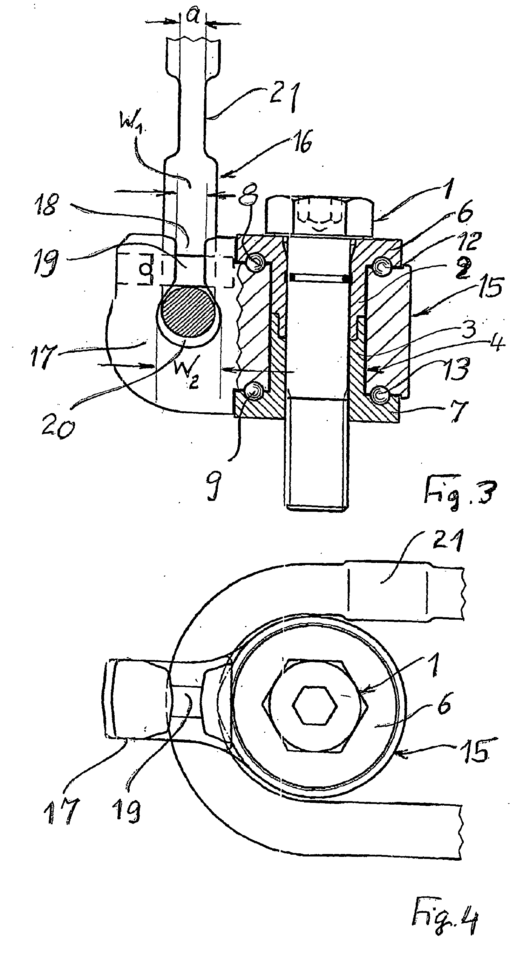

Bei der Anschlussvorrichtung gemäß den Figuren 3 und 4, in denen für Teile, die den in den Figuren 1 und 2 dargestellten Teilen entsprechen, gleiche Bezugszeichen verwendet werden, erfolgt der Zusammenbau des Verbindungselementes 15 mit dem Befestigungselement 1 in der gleichen Weise wie zuvor beschrieben, so dass insoweit auf die bereits gemachten Ausführungen verwiesen werden kann. Der Unterschied zwischen der zweiten Ausführungsform und der bereits beschriebenen ersten Ausführungsform besteht darin, dass das Anschlusselement 16 der zweiten Ausführungsform lösbar mit dem Verbindungselement 15 verbunden ist. Das Verbindungselement 15 ist zu diesem Zweck mit einem Gabelkopf 17 ausgestattet, der einen Einführspalt 18 aufweist, welcher durch einen Querbolzen 19 überbrückt werden kann. An den eine lichte Weite W₁ aufweisenden Einführspalt 18 schließt sich eine Öse 20 mit einer lichten Weite W₂ an, die mindestens der 1,5fachen lichten Weite W₁ des Einführspaltes 18 entspricht. Die Verwendung eines Verbindungselementes 15 mit einem Gabelkopf 17 ermöglicht es, das Verbindungselement 15 mit Anschlusselementen unterschiedlicher Art zu kombinieren. Dabei ist es vorteilhaft, Anschlusselemente zu verwenden, die wie das in den Figuren 3 und 4 dargestellte, von einem Aufhängeglied gebildete Anschlusselement 16 mit einer abgeflachten Zone 21 versehen sind, deren Dicke a kleiner als die lichte Weite W₁ des Einführspaltes 18 ist.

## Patentansprüche

1. Anschlussvorrichtung zum Anschließen von Anschlag- oder Verzurrmitteln an zu transportierenden oder zu verzurrenden Gegenständen mit einem zu ihrer Befestigung am jeweiligen Gegenstand dienenden, von einer Schraube gebildeten Befestigungselement (1), mit einem Anschlusselement (11, 16) für das Anschlag- oder Verzurrmittel und mit einem das Befestigungselement (1) mit dem Anschlusselement (11, 16) verbindenden, drehbar um die Längsachse des Befestigungselementes auf einer das Befestigungselement (1) auf einem Teil seiner Länge umschließenden zweiteiligen Buchse (4) gelagerten Verbindungselement (10, 15), dessen Axiallage auf der Buchse (4) durch an sich gegenüberliegenden Enden der Buchse (4) angeordnete Ringflansche (6, 7) gesichert ist, **dadurch gekennzeichnet, dass** sich das Verbindungselement (10, 15) im Bereich der Ringflansche (6, 7) der Buchse (4) über jeweils eine Wälzkörperreihe (12, 13) an der Buchse (4) abstützt und eine für die Wälzkörper der Wälzkörperreihe (12) vorgesehene Lauffläche aufweist.

2. Anschlussvorrichtung nach Anspruch 1, **dadurch gekennzeichnet, dass** die beiden, die Buchse (4) bildenden Teile (2, 3) sich mindestens partiell überlappen und im Bereich ihrer Überlappung durch eine Presspassung miteinander verbunden sind.

3. Anschlussvorrichtung nach Anspruch 1 oder 2, **dadurch gekennzeichnet, dass** die Wälzkörperreihen (12, 13) zusammen mit dem Verbindungselement (10, 15) und der Buchse (4) Schrägrollenlager bilden.

4. Anschlussvorrichtung nach einem der Ansprüche 1 bis 3, **dadurch gekennzeichnet, dass** das Anschlusselement (11, 16) im Abstand von der Längsachse des Befestigungselementes (1) schwenkbar am Verbindungselement (10, 15) gelagert ist.

5. Anschlussvorrichtung nach einem der Ansprüche 1 bis 4, **dadurch gekennzeichnet, dass** das Verbindungselement (15) einen Gabelkopf (17) aufweist, in den das Anschlusselement (16) einhängbar ist.

6. Anschlussvorrichtung nach Anspruch 5, **dadurch gekennzeichnet, dass** der Gabelkopf (17) mit einer sich an einen durch einen Querbolzen (19) überbrückbaren Einführspalt (18) anschließenden Öse (20) versehen ist, deren lichte Weite (W₂) größer als die lichte Weite (W₁) des Einführspaltes (18) ist.

7. Anschlussvorrichtung nach Anspruch 6, **dadurch gekennzeichnet, dass** das Anschlusselement (16) mit einer abgeflachten Zone (21) versehen ist, deren Dicke (a) kleiner als die lichte Weite (W₁) des Einführspaltes (18) ist.

8. Anschlussvorrichtung nach einem der Ansprüche 1 bis 7, **dadurch gekennzeichnet, dass** das Anschlusselement (11, 16) von einem über das Befestigungselement (1) klappbaren Aufhängeglied gebildet wird.

## Claims

1. Attachment device for attaching slinging or lashing means to articles which are to be transported or lashed, having a fastening element (1) which serves for fastening the same on the respective article and is formed by a bolt, having an attachment element (11, 16) for the slinging or lashing means, and having a connecting element (10, 15) which connects the fastening element (1) to the attachment element (11, 16), is mounted, such that it can be rotated about the longitudinal axis of the fastening element, on a two-part bushing (4) enclosing the fastening element (1) over part of its length, and has its axial position on the bushing (4) secured by annular flanges (6, 7) arranged at opposite ends of the bushing (4), **characterized in that** the connecting element (10, 15) is supported on the bushing (4), in the region of the annular flanges (6, 7) of the bushing (4), via a series of rolling-contact bodies (12, 13) in each case and has a running surface provided for the rolling-contact bodies of the series of rolling-contact bodies (12).

2. Attachment device according to claim 1, **characterized in that** the two parts (2, 3) which form the bushing (4) overlap at least partially and, in the region of their overlap, are connected to one another by a press fit.

3. Attachment device according to claim 1 or 2, **characterized in that** the series of rolling-contact bodies (12, 13), together with the connecting element (10, 15) and the bushing (4), form angular roller bearings.

4. Attachment device according to one of claims 1 to 3, **characterized in that** the attachment element (11, 16) is mounted in a pivotable manner on the connecting element (10, 15) at a distance from the longitudinal axis of the fastening element (1).

5. Attachment device according to one of claims 1 to 4, **characterized in that** the connecting element (15) has a fork head (17) in which the attachment element (16) can be suspended.

6. Attachment device according to claim 5, **characterized in that** the fork head (17) is provided with an eyelet (20) which adjoins an introduction gap (18), which can be bridged by a transverse bolt (19), and of which the inside width (W₂) is greater than the inside width (W₁) of the introduction gap (18).

7. Attachment device according to claim 6, **characterized in that** the attachment element (16) is provided with a flattened zone (21), of which the thickness (a) is smaller than the inside width (W₁) of the introduction gap (18).

8. Attachment device according to one of claims 1 to 7, **characterized in that** the attachment element (11, 16) is formed by a suspension member which can be swung over the fastening element (1).

## Revendications

1. Dispositif d'accouplement permettant d'accrocher des moyens d'accrochage ou d'arrimage sur des objets à transporter ou à arrimer, comprenant un élément de fixation (1) constitué par une vis, servant à la fixation de ces moyens sur l'objet correspondant, et comprenant un élément d'accouplement (11, 16) pour le moyen d'accrochage ou d'arrimage, et comprenant un élément de liaison (10, 15) reliant l'élément de fixation (1) à l'élément d'accouplement (11, 16), monté de façon rotative autour de l'axe longitudinal de l'élément de fixation par l'intermédiaire d'une douille (4) en deux parties qui entoure l'élément de fixation (1) sur une partie de la longueur de celui-ci, élément de liaison dont la position axiale sur la douille (4) est arrêtée par des collerettes annulaires (6, 7) disposées aux extrémités opposées de la douille (4),
**caractérisé en ce que** l'élément de liaison (10, 15) s'appuie au niveau des collerettes annulaires (6, 7) de la douille (4) sur cette dernière, par l'intermédiaire d'une rangée correspondante de corps de roulement (12, 13), et comporte une surface de roulement prévue pour les corps de roulement de la rangée de corps de roulement (12).

2. Dispositif d'accouplement selon la revendication 1, **caractérisé en ce que** les deux parties (2, 3) constituant la douille (4) se recouvrent au moins partiellement et sont reliées l'une à l'autre par l'intermédiaire d'un joint à ajustement serré au niveau de leur recouvrement.

3. Dispositif d'accouplement selon la revendication 1 ou la revendication 2, **caractérisé en ce que** les rangées de corps de roulement (12, 13) forment, en conjonction avec l'élément de liaison (10, 15) et la douille (4), des roulements à rouleaux à contact oblique.

4. Dispositif d'accouplement selon l'une des revendications 1 à 3, **caractérisé en ce que** l'élément d'accouplement (11, 16) est monté de façon pivotante sur l'élément de liaison (10, 15), à une distance de l'axe longitudinal de l'élément de fixation (1).

5. Dispositif d'accouplement selon l'une des revendications 1 à 4, **caractérisé en ce que** l'élément de liaison (15) comporte une chape en U (17), dans laquelle l'élément d'accouplement (16) peut être accroché.

6. Dispositif d'accouplement selon la revendication 5, **caractérisé en ce que** la chape en U (17) est pourvue d'une gueule (20) rejoignant une fente d'insertion (18) pouvant être fermée au moyen d'une goupille transversale (19), la largeur intérieure (W₂) de la gueule étant supérieure à la largeur intérieure (W₁) de la fente d'insertion (18).

7. Dispositif d'accouplement selon la revendication 6, **caractérisé en ce que** l'élément d'accouplement (16) est pourvu d'une zone aplatie (21) dont l'épaisseur (*a*) est inférieure à la largeur intérieure (W₁) de la fente d'insertion (18).

8. Dispositif d'accouplement selon l'une des revendications 1 à 7, **caractérisé en ce que** l'élément d'accouplement (11, 16) est constitué par un élément d'élingage pouvant être replié sur l'élément de fixation (1).
